# EUROPÄISCHE PATENTSCHRIFT

(11) **EP 1 805 968 B1**
(45) Veröffentlichungstag und Bekanntmachung des Hinweises auf die Patenterteilung: **18.02.2009**
(21) Anmeldenummer: 05779127.9
(22) Anmeldetag: 31.08.2005
(51) Int. Cl.: H04L 29/08

(54) **KOMMUNIKATIONSSYSTEM, NACHRICHTENVERARBEITUNGSRECHNER UND VERFAHREN ZUR LOKALISIERUNG EINES BENUTZERS**
COMMUNICATION SYSTEM, MESSAGE PROCESSING COMPUTER, AND METHOD FOR LOCALISING A USER
SYSTEME DE COMMUNICATION, ORDINATEUR DE TRAITEMENT D'INFORMATIONS ET PROCEDE DE LOCALISATION D'UN UTILISATEUR

(30) Priorität: 29.09.2004 DE 102004047352
(43) Veröffentlichungstag der Anmeldung: 11.07.2007
(73) Patentinhaber: Siemens Enterprise Communications GmbH & Co. KG, 81379 München (DE)
(72) Erfinder: AHRENS, Werner, 33106 Paderborn (DE); BARTELS, Heinrich, 33104 Paderborn (DE)
(74) Vertreter: Maier, Daniel Oliver
(86) Internationale Anmeldenummer: PCT/EP2005/054289
(87) Internationale Veröffentlichungsnummer: WO 2006/034939

(56) Entgegenhaltungen:
- WO-A-00/79761
- WO-A-03/003653

## Beschreibung

Die Erfindung betrifft ein Kommunikationssystem mit einem Nachrichtenverarbeitungsrechner und einer Mehrzahl von Kommunikationsnetzen, die jeweils einen Schnittstellenrechner aufweisen. Die Schnittstellenrechner sind mit dem Nachrichtenverarbeitungsrechner verbunden zum Abbilden eines Datenstroms zwischen dem jeweiligen Schnittstellenrechner und dem Nachrichtenverarbeitungsrechner eingerichtet. Die Erfindung betrifft weiterhin einen Nachrichtenverarbeitungsrechner zum Einsatz in einem derartigen Kommunikationssystem. Gegenstand der Erfindung ist weiterhin ein Verfahren zum Verarbeiten einer von einem Kommunikationsgerät an den Nachrichtenverarbeitungsrechner gesendeten Anforderungs-Nachricht.

Gegenwärtig existieren verschiedene Kommunikationsnetze, die sich unterschiedlicher Infrastrukturen sowie unterschiedlicher Protokolle oder Übertragungstechnologien zum Austausch von Daten untereinander bedienen. Beispiele für derartige Kommunikationsnetze sind Local Area Networks (LAN) sowie Wireless Local Area Networks (WLAN), welche beide in einem Kommunikationsnetz angeordnete Kommunikationsgeräte, z.B. Rechner, auf Basis des Internet-Protokolls (IP) miteinander verbinden. Aus dem Bereich der Telekommunikation umfassen Kommunikationsnetze nach dem GSM-Standard arbeitende Kommunikationsgeräte (Group Speciale Mobile) sowie nach den Standards DECT (Digital Enhanced Cordless Telecommunication) oder UMTS (Universal Mobile Telecommunications System) arbeitende Kommunikationsgeräte.

Wenn im Folgenden von einem Kommunikationsgerät die Rede ist, werden hierunter sowohl mobile Geräte als auch mit Hilfe von leitungsgebundenen Technologien arbeitende Geräte verstanden.

Die einem Kommunikationsnetz zugeordneten Kommunikationsgeräte werden nachfolgend auch als Rechner oder Teilnehmergerät bezeichnet. Während der Begriff des Rechners stellvertretend - für ein unbestimmtes Kommunikationsgerät steht, soll der Begriff des Teilnehmergeräts stellvertretend für ein bestimmtes, z.B. einem Benutzer zugeordnetes, Kommunikationsgerät stehen.

In der Praxis werden durch einen Benutzer häufig Kommunikationsgeräte unterschiedlicher Kommunikationsnetze parallel benutzt. Dabei ist jedoch in der Regel nicht bekannt, welches Kommunikationsgerät in welchem Kommunikationsnetz der Benutzer zu einem bestimmten Zeitpunkt verwendet. Um einen Benutzer zu lokalisieren, um diesem beispielsweise Daten zu übersenden, müssen deshalb häufig mehrere Versuche unternommen werden, um das gerade aktuelle Kommunikationsgerät ausfindig zu machen. Das Zusenden von Daten ist dabei gleichbedeutend mit einem Vorgang, in welchem versucht wird, ein Telekommunikationsendgerät zum Zwecke eines Sprachanrufs zu erreichen. Ein Problem besteht dabei häufig darin, dass der suchenden Instanz (dem Benutzer bzw. dem ihm zugeordneten Kommunikationsgerät) nicht alle Möglichkeiten bekannt sind, unter denen die gesuchte Instanz (eines von mehreren Teilnehmergeräten) erreichbar ist.

Ein weiteres Problem besteht unter anderem darin, dass in jedem Kommunikationsnetz dem Benutzer bzw. dem ihm zugeordneten Kommunikationsgerät unterschiedliche Kennungen zugewiesen sind. Kennungen können beispielsweise der Name einer gesuchten Person, eine Telefonnummer, eine E-Mail-Adresse, oder ähnliches sein.

Wünschenswert wäre eine Lokalisierung einer gesuchten Instanz, welche durch eine Person oder ein Kommunikationsgerät repräsentiert sein kann, ohne Kenntnis der aktuell genutzten Infrastruktur unter einer beliebigen Kennung. Dabei wäre es von Vorteil, wenn die Notwendigkeit, mehrere Ortungs- bzw. Suchversuche durchführen zu müssen, entfallen kann.

In der WO 00/79761 A1 ist ein Verfahren zum Roaming von IP-Telefonteilnehmer in einem IP-Telefonetz beschrieben, bei dem mit Hilfe einer Cell Visited Function im PSTN bzw. im zellularen Netzwerk und einer Mobilen IP-Telefon Funktion das Roaming zwischen den Netzwerken gesteuert wird. Im Rahmen eines Verbindungsaufbaus wird eine RN REG Nachricht (Roaming Number Anforderungs-Nachricht) einschließlich einer IMSI von der Cellular Home Function zur Gateway Function übermittelt. Von der Gateway Function wird eine STATUS ENG (Status Enquiry Message) zur MIPTN visited Function (Mobile IP Telefon Network) übermittelt, um den Status des gerufenen Teilnehmergeräts im IP-Telefonnetz zu ermitteln.

In der WO 03/003653 A2 ist ein Gateway zwischen einem verbindungslosen Paketsignalisierungsnetz und einem Netz mit Internetprotokoll beschrieben, bei dem eine Presence Information von einem Nachrichtenzentrum eines drahtlosen Netzes erhalten und in eine IP-Protokoll kompatible Information übersetzt wird und umgekehrt.

Es ist daher Aufgabe der vorliegenden Ereindung, ein Kommunikationssystem sowie einen Nachrichtenverarbeitungsrechner anzugeben, welche die oben genannten Erfordernisse erfüllen. Weiterhin soll ein Verfahren angegeben werden, welches diese Erfordernisse erfüllt.

Diese Aufgaben werden mit einem Kommunikationssystem mit den Merkmalen des Patentanspruches 1, mit einem Nachrichtenverarbeitungsrechner mit den Merkmalen des Patentanspruches 11 sowie mit einem Verfahren zum Verarbeiten einer von einem Kommunikationsgerät an einen Nachrichtenverarbeitungsrechner gesendeten Anforderungs-Nachricht mit den Merkmalen des Patentanspruches 15 erfüllt.

Vorteilhafte Ausgestaltungen ergeben sich jeweils aus den abhängigen Patentansprüchen.

Das erfindungsgemäße Kommunikationssystem weist einen Nachrichtenverarbeitungsrechner sowie eine Mehrzahl an Kommunikationsnetzen auf, die jeweils einen Schnittstellenrechner umfassen. Die Schnittstellenrechner sind mit dem Nachrichtenverarbeitungsrechner gekoppelt und zum Abbilden eines Datenstroms zwischen dem jeweiligen Schnittstellenrechner und dem Nachrichtenverarbeitungsrechner eingerichtet. Es ist weiterhin eine Einrichtung des Nachrichtenrechners vorgesehen, die derart ausgestaltet ist, dass bei einer von einem Kommunikationsgerät übermittelten, mit einer Kennung eines Teilnehmers versehenen Anforderungs-Nachricht ermittelt wird, in welchen der Kommunikationsnetze Teilnehmergeräte des durch die Kennung angezeigten Teilnehmers angeordnet sind sowie Kommunikationsnetz-Anforderungs-Nachrichten für die betroffenen Kommunikationsnetze gebildet und an die betroffenen Schnittstellenrechner gesendet werden.

Ein erfindungsgemäßer Nachrichtenverarbeitungsrechner ist derart eingerichtet, dass bei einer von einem Kommunikationsgerät an den Nachrichtenverarbeitungsrechner gesendeten, mit einer Kennung eines Teilnehmers versehenen Anforderungs-Nachricht ermittelt wird, in welchen der jeweils über einen Schnittstellenrechner mit dem Nachrichtenverarbeitungsrechner gekoppelten Kommunikationsnetze Teilnehmergeräte des durch die Kennung angezeigten Teilnehmers angeordnet sind und Kommunikationsnetz-Anforderungs-Nachrichten für die betroffenen Kommunikationsnetze gebildet werden, die an die betroffenen Schnittstellenrechner gesendet werden.

Bei dem erfindungsgemäßen Verfahren zum Verarbeiten einer von einem Kommunikationsgerät einem Nachrichtenverarbeitungsrechner zugeführten und mit einer Kennung eines Teilnehmers versehenen Anforderungs-Nachricht wird ermittelt, in welchen der über jeweils über einen Schnittstellenrechner mit dem Nachrichtenverarbeitungsrechner gekoppelten Kommunikationsnetze Teilnehmergeräte des durch die Kennung des Teilnehmers angezeigten Teilnehmers angeordnet sind. Aus der Anforderungs-Nachricht werden Kommunikationsnetz-Anforderungs-Nachrichten gebildet und an die betroffenen Schnittstellenrechner gesendet.

Mit anderen Worten ausgedrückt, schlägt die Erfindung vor, zur Lokalisierung einer gesuchten Instanz (einer Person oder einem der Person zugeordneten Kommunikationsgerät) in einem der Kommunikationsnetze eine von einer suchenden Instanz (Kommunikationsgerät) gebildete Anforderungs-Nachricht an einen Nachrichtenverarbeitungsrechner zu übermitteln, welcher in Verbindung mit den Kommunikationsnetzen steht und den entsprechenden Suchauftrag an die Kommunikationsnetze, insbesondere darin vorgesehene Schnittstellenrechner weiterleitet, um schließlich die gewünschten Informationen ermitteln zu können.

Der Vorteil dieser Vorgehensweise besteht darin, dass die suchende Instanz, welche in der vorliegenden Anmeldung als Kommunikationsgerät bezeichnet wird, keine Kenntnis von der aktuell genutzten Infrastruktur, d.h. der Verwendung eines einer Vielzahl von Kommunikationsnetzen, haben muss. Durch die Übermittlung der Anforderungs-Nachricht an eine zentrale Einheit, den Nachrichtenverarbeitungsrechner, entfällt die Notwendigkeit, für jedes der möglichen Kommunikationsnetze eine Suche durchzuführen. Aufgrund der Zentralisierung in dem Nachrichtenverarbeitungsrechner entfällt darüber hinaus für die suchende Instanz die Notwendigkeit, die von einer Vielzahl an Kommunikationsnetzen übermittelten Ergebnisse selbst interpretieren zu müssen. Mit der Erfindung ist es weiterhin nicht mehr erforderlich, dass die gesuchte Instanz, für jedes Kommunikationsgerät in jedem der Kommunikationsnetze einen manuellen Eintrag in einer innerhalb des Kommunikationsnetzes oder außerhalb davon vorgesehenen Datenbank vornehmen muss, um seinen aktuellen Status für suchende Instanzen transparent zu halten.

Vorteilhaft enthält die Anforderungs-Nachricht die Kennung eines Teilnehmergeräts zumindest eines der Kommunikationsnetze. Anhand der Kennung, welche beispielsweise eine von mehreren Telefonnummern eines Benutzers, den Namen eines Benutzers, die e-Mail-Adresse eines Benutzers oder eine sonstige Identifizierung darstellen kann, wird der Nachrichtenverarbeitungsrechner in die Lage versetzt, die einem gesuchten Benutzer zugeordneten jeweiligen Teilnehmergeräte der Mehrzahl an Kommunikationsnetzen ausfindig zu machen. Anhand der Kennung kann deshalb ermittelt werden, in welchen der Kommunikationsnetze ein Benutzer überhaupt Teilnehmer ist und welche für dieses Kommunikationsnetz spezifischen Kennungen jeweils von Interesse sind.

In einer weiteren Ausgestaltung enthalten die Schnittstellenrechner jedes Kommunikationsnetzes oder alternativ ein Rechner außerhalb der Kommunikationsnetze Informationen über die Teilnahme eines Teilnehmergeräts im betreffenden Kommunikationsnetz. Die Überprüfung, ob eine gesuchte Instanz Teilnehmer eines Kommunikationsnetzes ist, kann somit durch die Abfrage einer Datenbank erfolgen, welche entweder spezifisch für das jeweilige Kommunikationsnetz in dem Kommunikationssystem, z.B. dem Schnittstellenrechner, oder in einer zentralen Datenbank, welche Informationen über die Teilnehmer sämtlicher Kommunikationsnetze des Kommunikationssystems verfügt, abgefragt werden.

Gemäß einer weiteren vorteilhaften Ausgestaltung sind die Kommunikationsnetz-Anforderungs-Nachrichten gemäß einem Kommunikationsnetz-spezifischen Protokoll des betreffenden Kommunikationsnetzes gebildet. Sofern die Schnittstellenrechner jeweiliger Kommunikationsnetze lediglich dem Zweck dienen, Datenbanken über die Teilnehmer der Kommunikationsnetze vorzuhalten, welche zur Abfrage von außerhalb des Kommunikationsnetzes dienen, kann auf das Vorsehen solcher spezifischer Protokolle verzichtet werden.

In einer zweckmäßigen Ausgestaltung der Erfindung ist die Einrichtung derart ausgestaltet, dass aus der Anforderungs-Nachricht des Kommunikationsgeräts die Kennung, die dem Teilnehmergerät der Kommunikationsnetze zugeordnet sind, ermittelt und weiter verarbeitet wird.

Gemäß einer weiteren vorteilhaften Ausgestaltung kann das weiterverarbeiten der Kennung darin bestehen, dass für den Fall, dass kein einem durch die Kennung angezeigten Teilnehmer zugeordnetes Kommunikationsgerät ermittelt werden kann, ein Bilden einer Kommunikationsnetz-Anforderungs-Nachricht nicht erfolgt. Die Überprüfung der Zuordnung kann, wie oben beschrieben, durch Überprüfung entsprechender Datenbanken erfolgen.

In einer anderen Ausgestaltung ist die Einrichtung des erfindungsgemäßen Kommunikationssystems derart ausgestaltet, dass diese Antwort-Nachrichten seitens der Schnittstellenrechner oder eines Rechners außerhalb der Kommunikationsnetze ermittelt und daraus eine Kommunikationsgerät-Antwort-Nachricht bildet und diese an das Kommunikationsgerät sendet. Die Kommunikationsgerät-Antwort-Nachricht enthält die von dem Kommunikationsgerät angeforderte und gewünschte Information, welches Kommunikationsgerät in welchem Kommunikationsnetz einer gesuchten Instanz zugeordnet ist, um daraus Aufschluss über den Ort der gesuchten Instanz zu erhalten.

In einer Weiterbildung ist die Einrichtung derart ausgestaltet, dass aus den Antwort-Nachrichten Parameter, die das Teilnehmergerät eines Kommunikationsnetzes betreffen, ermittelt und weiter verarbeitet werden. Die Weiterverarbeitung kann darin bestehen, dass sämtliche Informationen der Mehrzahl an Kommunikationsnetzen gesammelt und an das die Anforderungs-Nachricht sendende Kommunikationsgerät übermittelt werden.

In einer weiteren Ausgestaltung ist vorgesehen, dass die Einrichtung derart ausgestaltet ist, dass die Parameter bewertet werden. Eine Bewertung umfasst beispielsweise eine Auswertung in der Hinsicht, dass das in einem Kommunikationsnetz gerade benützte Kommunikationsgerät als aktueller Aufenthaltsort eines Benutzers betrachtet wird und die diesen Aufenthaltsort kennzeichnenden Parameter an das die Anforderungs-Nachricht sendende Kommunikationsgerät übermittelt werden. Eine solche Ortsangabe kann durch eine textliche Bezeichnung, Koordinaten auf eine Landkarte oder die Markierung auf einer Karte erfolgen. Als zu bewertende Parameter können beispielsweise herangezogen werden: "aktuell benutztes Kommunikationsgerät", "aktuell angemeldetes Kommunikationsgerät", "letzte Anmeldung des Kommunikationsgeräts", "letztmals aktiv", usw. In die Bewertung fließen dabei auch Informationen über die Genauigkeit der Ortsangabe eines Kommunikationsgeräts in einem Kommunikationsnetz ein. Sind beispielsweise zwei Kommunikationsgeräte in zwei unterschiedlichen Kommunikationsnetzen derzeit aktiv (z.B. ein GSM-Mobilfunktelefon und ein Rechner in einem WLAN-Netz), so werden die Informationen desjenigen Kommunikationsgeräts herangezogen, die eine höhere Genauigkeit zulassen. Im genannten Beispiel wäre dies beispielsweise die Übernahme der Koordinaten des GSM-Mobilfunktelefons. Die Bewertung kann somit eine Priorisierung umfassen, sofern Informationen aus mehreren Kommunikationsnetzen an den Nachrichtenverarbeitungsrechner übermittelt werden. Bei gleichzeitiger Nutzung eines Rechners (in einem WLAN- oder einem LAN-Netz) und eines Telefons (sei es ein Festnetz- oder ein Mobilfunktelefon) so würde den Informationen der Telefon-Kommunikationsnetze der Vorzug gegeben.

Zweckmäßigerweise ist die Einrichtung in dem Nachrichtenverarbeitungsrechner angeordnet.

Die Kommunikationsnetze sind beispielsweise auf einem der folgenden Kommunikationsnetze: einem Local Area Network (LAN), einem Wireless Local Area Network (WLAN), einem Group Speziale Mobile (GSM)-Mobilfunknetz, einem Universal Mobile Telecommunications System (UMTS)-Mobilfunknetz, einem Future Public Land Mobile Telephone System (FPLMTS)-Mobilfunknetz, einem Digital Enhanced Cordless Telecommunication (DECT)-Mobilfunknetz oder einem drahtgebundenen Telekommunikationssystem repräsentiert. Die obige Aufzählung ist nicht als abschließend, sondern lediglich als beispielhaft zu betrachten.

Mit dem erfindungsgemäßen Nachrichtenverarbeitungsrechner sind die gleichen Vorteile verbunden, wie sie vorstehend in Verbindung mit dem Kommunikationssystem beschrieben wurden.

In einer Ausgestaltung ist der Nachrichtenverarbeitungsrechner derart eingerichtet, dass er Antwort-Nachrichten seitens der Schnittstellenrechner ermittelt und daraus eine Kommunikationsgerät-Antwort-Nachricht bildet und diese an ein Kommunikationsgerät sendet.

In einer weiteren zweckmäßigen Ausgestaltung ist der Nachrichtenverarbeitungsrechner derart ausgestaltet, dass er aus den Antwort-Nachrichten Parameter, die ein Teilnehmergerät eines Kommunikationsnetzes betreffen, ermittelt und weiter verarbeitet.

Zweckmäßigerweise ist der Nachrichtenverarbeitungsrechner derart ausgestaltet, dass er die Parameter, die ein Teilnehmergerät eines Kommunikationsnetzes betreffen, in der vorstehend beschriebenen Weise bewertet.

Mit dem erfindungsgemäßen Verfahren sind ebenfalls die gleichen Vorteile verbunden, wie sie in Verbindung mit dem erfindungsgemäßen Kommunikationssystem erläutert wurden.

Erfindungsgemäß wird anhand der Kennung für jedes mit dem Nachrichtenverarbeitungsrechner gekoppelten Kommunikationsnetz überprüft, ob die Kennung jeweils einem Teilnehmergerät der Kommunikationsnetze zuordenbar ist. Die Überprüfung kann anhand der Abfrage von Datenbanken, welche entweder innerhalb der jeweiligen Kommunikationsnetze oder außerhalb davon angeordnet sind, erfolgen.

In einer weiteren Ausgestaltung wird aus der Anforderungs-Nachricht eine für jedes Kommunikationsnetz spezifische Kommunikationsnetz-Anforderungs-Nachricht gebildet, wenn eine Zuordnung der Kennung zu einem Teilnehmergerät des betreffenden Kommunikationsnetzes gegeben ist. Erfolgt die Abfrage, welche Kennung Teilnehmergeräten welcher Kommunikationsnetze zuordenbar ist, in einer zentralen Datenbank außerhalb der Kommunikationsnetze, so braucht die Kommunikationsnetz-Anforderungs-Nachricht lediglich an diejenigen Kommunikationsnetze übertragen zu werden, bei welcher eine positive Zuordnung gegeben ist. Je nach Ausgestaltung der Kommunikationsnetze, und insbesondere der in diesen angeordneten Schnittstellenrechner, kann die Kommunikationsnetz-Anforderungs-Nachricht in einem spezifischen Protokoll ausgebildet sein.

In einer weiteren Ausgestaltung werden Antwort-Nachrichten seitens der Schnittstellenrechner ermittelt und daraus eine Kommunikationsgerät-Antwort-Nachricht gebildet und an das Kommunikationsgerät gesendet.

Bevorzugt werden aus der einen oder den mehreren Antwort-Nachrichten Parameter, die ein Teilnehmergerät eines Kommunikationsnetzes betreffen, ermittelt und weiter verarbeitet. Noch weiter bevorzugt werden die Parameter bewertet, und das Ergebnis der Bewertung wird an das Kommunikationsgerät gesendet.

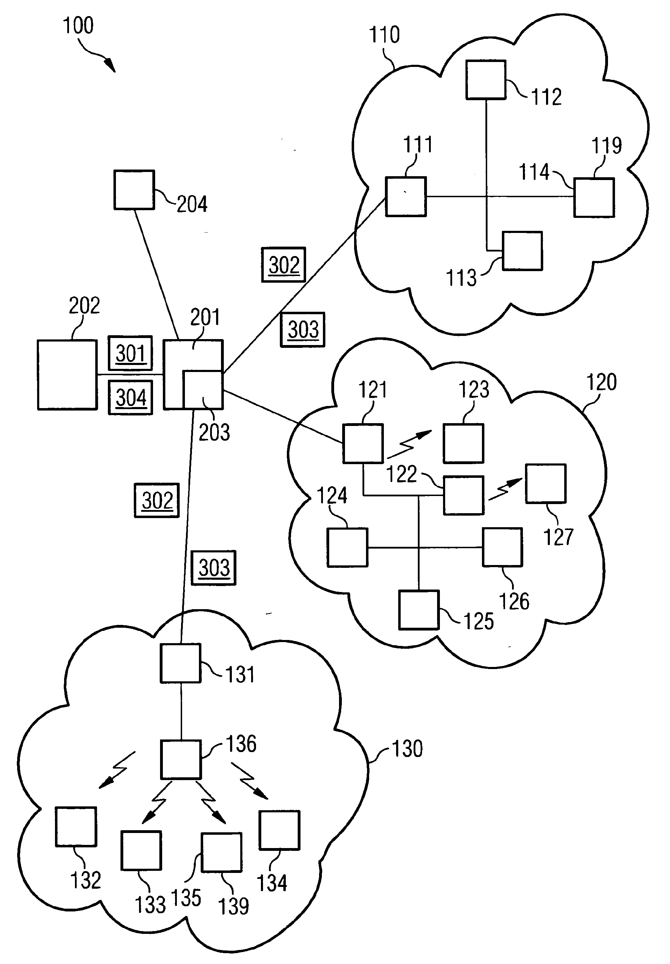

Die Erfindung wird nachfolgend anhand der Figur näher erläutert.

In der Figur ist ein erfindungsgemäßes Kommunikationssystem 100 dargestellt. Dieses weist beispielhaft drei Kommunikationsnetze 110, 120, 130 auf, wobei sich jedes der Kommunikationsnetze einer eigenen Infrastruktur mit gegebenenfalls unterschiedlichen Kommunikationsgeräten und gegebenenfalls unterschiedlichen Datenübertragungstechniken bedient.

So repräsentiert das Kommunikationsnetz 110 beispielsweise ein nach dem GSM-Standard arbeitendes Telekommunikationssystem, welches in der Figur beispielhaft drei Kommunikationsgeräte 112, 113, 114 aufweist. Jedes der Kommunikationsgeräte 112, 113, 114 ist entweder direkt (wie in der Figur gezeigt) oder indirekt über eines der Kommunikationsgeräte mit einem Schnittstellenrechner 111 verbunden.

Das Kommunikationsnetz 120 repräsentiert beispielsweise ein kombiniertes Local Area Network (LAN) mit einem Wireless Local Area Network (WLAN). Die in dem Kommunikationsnetz enthaltenen Kommunikationsgeräte sind mit den Bezugszeichen 122, 123, 124, 125, 126, 127 versehen. Während die Kommunikationsgeräte 123, 127 einen Datenaustausch drahtlos mit anderen Kommunikationsgeräten vornehmen, sind die übrigen Kommunikationsgeräte drahtgebunden. Auch in diesem Kommunikationsnetz 120 sind die Kommunikationsgeräte entweder direkt oder indirekt mit einem Schnittstellenrechner 121 verbunden.

Auch das Kommunikationsnetz 130, welches beispielsweise ein Telekommunikationsnetz nach dem DECT-Standard darstellt, weist einen solchen Schnittstellenrechner 131 auf. Die Kommunikationsgeräte sind mit den Bezugszeichen 132 bis 136 versehen, wobei das Kommunikationsgerät 136 z.B. eine Basisstation und die übrigen Kommunikationsgeräte mobile Telekommunikationsendgeräte darstellen.

Jedem der Kommunikationsgeräte bzw. dem diese benutzenden Benutzer ist dabei eine Kennung zugeordnet. Dies gilt für alle drei beschriebenen Kommunikationsnetze.

Neben den drei beispielhaft aufgeführten Kommunikationsnetzen kann ein Kommunikationssystem 100 darüber hinaus eine Vielzahl weiterer anderer Kommunikationsnetze aufweisen. Insbesondere ist es auch möglich, dass mehrere Kommunikationsnetze eine gleiche Infrastruktur aufweisen. Dabei könnte die Infrastruktur eines Kommunikationsnetzes beispielsweise einem Netzbetreiber zugeordnet sein, während die Infrastruktur eines anderen Kommunikationsnetzes einem anderen Netzbetreiber zugeordnet ist. Die obige Beschreibung mit lediglich drei Kommunikationsnetzen ist lediglich zum Zwecke der Beschreibung gewählt und deshalb nicht einschränkend zu verstehen.

Die Schnittstellenrechner 111, 121, 131 der Kommunikationsnetze 110, 120, 130 stellen eine Verbindung des Kommunikationsnetzes mit Elementen außerhalb der Kommunikationsnetze her. Zu diesem Zweck sind die Schnittstellenrechner 111, 121, 131 mit einem Nachrichtenverarbeitungsrechner 201 gekoppelt. Die Schnittstellenrechner 111, 121, 131 der Kommunikationssysteme 110, 120, 130 dienen unter anderem dazu, für das jeweilige Kommunikationsnetz die Lokalisierung des gesuchten Kommunikationsgeräts durchzuführen. Die dabei erzielbare Genauigkeit ist von der verwendeten Technologie des Kommunikationsnetzes abhängig. Die Ortsangabe kann bei einer DECT- oder WLAN-Infrastruktur eine absolute Genauigkeit von einigen Metern haben. Bei einer LAN- oder GSM-Infrastruktur erfolgt die lokale Sicherung z.B. durch die Angabe des entsprechenden Access Points mit einer sich daraus für das Gerät ergebenden Genauigkeit. Als Ergebnis der Lokalisierung erfolgt durch den jeweiligen Schnittstellenrechner eine Ortsangabe, z.B. durch eine textliche Bezeichnung, eine Markierung auf einer Karte oder durch die Angabe von Ortskoordinaten. Darüber hinaus werden Parameter wie "aktuell aktiv", "aktuell angemeldet", "wann zuletzt aktiv", usw. ermittelt und zur Verfügung gestellt.

Obwohl lediglich ein Nachrichtenverarbeitungsrechner 201 dargestellt ist, kann ein Kommunikationssystem eine Vielzahl an außerhalb der Kommunikationsnetze angeordneten Nachrichtenverarbeitungsrechnern aufweisen, welche auch unterschiedliche Aufgaben übernehmen. So könnte einer der Nachrichtenverarbeitungsrechner dazu eingerichtet sein, Vermittlungsdienste zwischen den Schnittstellenrechnern unterschiedlicher Kommunikationsnetze zu übernehmen. Ein anderer Nachrichtenverarbeitungsrechner könnte dazu eingerichtet sein, lediglich Anfragen zu verarbeiten oder auch Daten zu verwalten, während die eigentliche Nachrichtenvermittlung über einen anderen Nachrichtenverarbeitungsrechner geschieht.

Wie aus der nachfolgenden Beschreibung näher deutlich werden wird, dient der Nachrichtenverarbeitungsrechner 201 nicht oder zumindest nicht primär zur Datenvermittlung zwischen Kommunikationsgeräten unterschiedlicher Kommunikationsnetze.

Mit dem Nachrichtenverarbeitungsrechner 201 ist ein Kommunikationsgerät 202 gekoppelt. Darüber hinaus kann optional ein Rechner 204 vorgesehen sein, welcher ebenfalls mit dem Nachrichtenverarbeitungsrechner 201 verbunden ist. Der Rechner 204 enthält eine Datenbank mit Informationen über die Kommunikationsgeräte eines jeden mit dem Nachrichtenverarbeitungsrechner 201 verbundenen Kommunikationsnetzes 111, 120, 130, wobei hierbei insbesondere Informationen über die Zuordnung eines Kommunikationsgeräts zu einem Teilnehmer (d.h. einem Benutzer) ermittelt werden können.

Die gleichen Informationen über die Zuordnung eines Kommunikationsgerätes zu einem Benutzer können darüber hinaus für ein jeweiliges Kommunikationsnetz 110, 120, 130 in den jeweiligen Schnittstellenrechnern 111, 121, 131 vorhanden sein.

Mit der vorliegenden Infrastruktur ist es möglich, einen Benutzer, welcher Kommunikationsgeräte mehrerer Kommunikationssysteme nutzen kann, automatisch unter einer beliebigen Kennung zu lokalisieren. Dabei entfällt die Notwendigkeit, mehrere Ortungsversuche durchführen zu müssen. Eine Interpretation der Ortungsergebnisse wird, wie nachfolgend ersichtlich werden wird, durch eine Einrichtung 203 in dem Nachrichtenverarbeitungsrechner 201 vorgenommen.

Die Funktionsweise des erfindungsgemäßen Kommunikationssystems 100 wird nachfolgend näher erläutert. Das Kommunikationsgerät 202, das beispielsweise ein Kommunikationsendgerät eines Benutzers darstellen kann (z.B. einen Rechner, ein Mobilfunktelefon und dergleichen), überträgt eine Anforderungs-Nachricht 301 an den Nachrichtenverarbeitungsrechner 201. Die Anforderungs-Nachricht 301 enthält eine Kennung, die den gesuchten Benutzer bzw. dessen Teilnehmergeräten 119, 139 zugeordnet ist. Die Kennung kann beispielsweise der Name, eine e-Mail-Adresse oder eine Telefonnummer des gesuchten Benutzers sein. In der Regel hat die suchende Instanz, d.h. das Kommunikationsgerät 202 bzw. dessen Benutzer, keine Kenntnis davon, welcher Infrastruktur (d.h. welchem Teilnehmergerät 119, 139 in welchem Kommunikationsnetz) sich der gesuchte Benutzer gerade bedient. Herkömmlicherweise müssen deshalb durch die suchende Instanz mehrere Ortungsversuche unternommen werden, um den gesuchten Benutzer ausfindig zu machen. Dies ist mit der vorliegenden Erfindung jedoch nicht mehr länger notwendig.

Nachdem der Nachrichtenverarbeitungsrechner 201 die Anforderungs-Nachricht 301 des Kommunikationsgeräts 202 erhalten hat, wird vorbereitend ermittelt, über welche Teilnehmergeräte (welche unterschiedlichen Kommunikationsnetzen zugeordnet sein können), der gesuchte Benutzer grundsätzlich verfügt und welche (Benutzer-)Kennungen diesen Kommunikationsgeräten zugeordnet sind. Dies erfolgt durch Abfrage einer oder mehrerer Datenbanken, in denen die verfügbaren Kommunikationsgeräte mit der jeweiligen Benutzerkennung gespeichert sind. Wie vorstehend bereits beschrieben, kann eine derartige Datenbank zentral für sämtliche Kommunikationsnetze in dem Rechner 204 außerhalb der Kommunikationsnetze 110, 120, 130 angeordnet sein. Jeweilige Datenbanken können jedoch auch in den Schnittstellenrechnern 111, 121, 131 der betreffenden Kommunikationsnetze 110, 120, 130 vorgesehen sein.

Die Einrichtung 203 des Nachrichtenverarbeitungsrechners 201 ermittelt deshalb die in der Anforderungs-Nachricht 301 enthaltene Kennung. Nach Abfrage einer oder mehrerer Datenbanken ist mittels der Kennung ausfindig gemacht, welche Teilnehmergeräte dieser Kennung zugeordnet sind. Dabei können die Teilnehmergeräte selbst durchaus eine andere Kennung aufweisen als die aus der Anfrage-Nachricht ermittelte Kennung. Somit sind zunächst die für die Kennung der Anfrage-Nachricht relevanten Kommunikationsnetze bekannt. Im vorliegenden Ausführungsbeispiel sind dies die Kommunikationsnetze 110 und 130. An deren Schnittstellenrechnern 111, 131 werden nachfolgend entsprechende Kommunikationsnetz-Anforderungs-Nachrichten 302 übermittelt. Für das gewählte Ausführungsbeispiel bedeutet dies, dass der gesuchte Benutzer lediglich über Kommunikationsgeräte in dem GSM-Kommunikationsnetz 110 und dem DECT-Kommunikationsnetz 130 verfügt.

In den Kommunikations-Anforderungs-Nachrichten fragt die Einrichtung 203 weitere Parameter von den Schnittstellenrechnern 111, 131 ab. Diese Parameter können beispielsweise Informationen darüber enthalten, ob das jeweilige, einem Benutzer zugeordnete Kommunikationsgerät 119 bzw. 139 gerade eingeschaltet, angemeldet oder abgemeldet ist. Die Parameter können auch Informationen darüber enthalten, wann das Kommunikationsgerät zuletzt benutzt wurde. Da das dem gesuchten Benutzer zugeordnete Kommunikationsgerät auf einer drahtlosen Übertragungstechnik beruht, werden insbesondere Informationen über den Ort der Basisstationen abgefragt, welche Verbindung zu den Kommunikationsgeräten haben oder hatten. Diese Informationen werden in Form von Parametern als Antwort-Nachrichten 303 an die Einrichtung 203 zurückgesandt.

Die Einrichtung 203 ermittelt aus den Antwort-Nachrichten die Parameter und übernimmt eine Bewertung derselben. Die höchste Wertigkeit hat dabei der Parameter "aktuell aktiv". Dieser Parameter bedeutet z.B., dass das Kommunikationsgerät gerade benutzt wird. Damit ist eindeutig das aktuell genutzte Kommunikationsnetz gekennzeichnet, wobei ohne weiteres der Aufenthaltsort des Kommunikationsgeräts und somit des gesuchten Benutzers festgestellt werden kann. Mit dem Schritt des Bewertens wird somit eine Interpretation der an die Einrichtung 203 zurück gelieferten Parameter vorgenommen, um ein eindeutiges Ergebnis über den Aufenthaltsort des Kommunikationsgeräts bzw. des gesuchten Benutzers zu erhalten. Dieses Ergebnis wird in einer Kommunikationsgerät-Antwort-Nachricht 304 an das Kommunikationsgerät 202 zurückgesandt.

## Patentansprüche

1. Kommunikationssystem (100)
- mit einem Nachrichtenverarbeitungsrechner (201),
**dadurch gekennzeichnet,**
- **dass** eine Mehrzahl vom Kommunikationsnetzen (110,120,130) jeweils einen Schnittstellenrechner (111,121,131) aufweisen, der mit dem Nachrichtenverarbeitungsrechner (201) gekoppelt und zum Abbilden eines Datenstroms zwischen dem jeweiligen Schnittstellenrechner (111,121,131) und dem Nachrichtenverarbeitungsrechner (201) eingerichtet ist, dass eine Einrichtung (203) des Nachrichtenverarbeitungsrechners (201) derart ausgestaltet ist, dass bei einer von einem Kommunikationsgerät (202) übermittelten, mit einer Kennung eines Teilnehmers versehenen Anforderungsnachricht (301) ermittelt wird, in welchen der Kommunikationsnetze (110,120,130) Teilnehmergeräte (119,139) des durch die Kennung angezeigten Teilnehmers angeordnet sind sowie Kommunikationsnetz-Anforderungs-Nachrichten (302) für die betroffenen Kommunikationsnetze (110,120,130) gebildet und an die betroffenen Schnittstellenrechner (111,121,131) gesendet werden.

2. Kommunikationssystem nach Anspruch 1, **dadurch gekennzeichnet,**
**dass** die Schnittstellenrechner (111,121,131) jedes Kommunikationsnetzes (110,120,130) oder ein Rechner (204) außerhalb der Kommunikationsnetze (110,120,130) Informationen über die Teilnahme eines Teilnehmergeräts (119,139) an dem entsprechenden Kommunikationsnetz (110,120,130) enthalten.

3. Kommunikationssystem nach Anspruch 1 oder 2, **dadurch gekennzeichnet,**
**dass** die Kommunikationsnetz-Anforderungs-Nachrichten (302) gemäß einem kommunikationsnetz-spezifischen Protokoll des betroffenen Kommunikationsnetzes (110,120,130) gebildet sind.

4. Kommunikationssystem nach einem der Ansprüche 1 bis 3,
**dadurch gekennzeichnet,**
**dass** die Einrichtung (203) derart ausgestaltet ist, dass aus der Anforderungs-Nachricht (301) des Kommunikationsgeräts (202) die Kennung, die den gesuchten Teilnehmergeräten (119,139) zugeordnet ist, ermittelt und weiterverarbeitet wird.

5. Kommunikationssystem nach einem der Ansprüche 1 bis 4,
**dadurch gekennzeichnet,**
**dass** die Einrichtung derart ausgestaltet ist, dass für den Fall, dass kein einem durch die Kennung angezeigten Teilnehmer zugeordnetes Kommunikationsgerät (202) ermittelt werden kann, ein Bilden einer Kommunikationsnetz-Anforderungs-Nachricht (302) nicht erfolgt.

6. Kommunikationssystem nach einem der Ansprüche 1 bis 5,
**dadurch gekennzeichnet,**
**dass** die Einrichtung (203) derart ausgestaltet ist, dass die Antwort-Nachrichten (303) seitens der Schnittstellenrechner (111,121,131) oder des Rechners (204) außerhalb der Kommunikationsnetze (110,120,130) ermittelt und daraus eine Kommunikationsgerät-Antwort-Nachricht (304) gebildet und diese an das Kommunikationsgerät (202) gesendet, werden.

7. Kommunikationssystem nach Anspruch 6, **dadurch gekennzeichnet,**
**dass** die Einrichtung (203) derart ausgestaltet ist, dass aus den Antwort-Nachrichten (303) Parameter, die das Teilnehmergerät (119,139) eines Kommunikationsnetzes (110,120,130) betreffen, ermittelt und weiterverarbeitet werden.

8. Kommunikationssystem nach Anspruch 6 oder 7, **dadurch gekennzeichnet,**
**dass** die Einrichtung (203) derart ausgestaltet ist, dass die Parameter bewertet werden.

9. Kommunikationssystem nach einem der vorhergehenden Ansprüche, **dadurch gekennzeichnet,**
**dass** die Einrichtung (203) in dem Nachrichtenverarbeitungsrechner (201) angeordnet ist.

10. Kommunikationssystem nach einem der vorhergehenden Ansprüche, **dadurch gekennzeichnet,**
**dass** die Kommunikationsnetze (110,120,130) durch
- ein Local Area Network und/oder
- ein Wireless Local Area Network und/oder
- ein Group Speziale Mobile und/oder
- eine Universal Mobile Telecommunications Systeme und/oder
- ein Future Public Land Mobile Telephone System und/oder
- ein Digital Enhanced Cordless Telecommunication und/oder
- ein drahtgebundenes Telekommunikationssystem repräsentiert ist.

11. Nachrichtenverarbeitungsrechner (201),
**dadurch gekennzeichnet,**
**dass** der Nachrichtenverarbeitungsrechner (201) derart eingerichtet ist, dass bei einer von einem Kommunikationsgerät (202) übermittelten, mit einer Kennung eines Teilnehmers versehenen Anforderungsnachricht (301) ermittelt wird, in welchen der über jeweils über einen Schnittstellenrechner (111;121,131) mit dem Nachrichtenverarbeitungsrechner (201) gekoppelten Kommunikationsnetze (110,120,130) Teilnehmergeräte (119,139) des durch die Kennung angezeigten Teilnehmers angeordnet sind und Kommunikationsnetz-Anforderungs-Nachrichten (302) für die betroffenen Kommunikationsnetze (110,120,130) gebildet werden, die an die betroffenen Schnittstellenrechner (111,121,131) gesendet werden.

12. Nachrichtenverarbeitungsrechner nach Anspruch 11, **dadurch**
**gekennzeichnet,**
**dass** dieser derart eingerichtet ist, dass er Antwort-Nachrichten (303) seitens der Schnittstellenrechner (111,121,131) ermittelt und daraus eine Kommunikationsgerät-Antwort-Nachricht (304) bildet und diese an das Kommunikationsgerät (202) sendet.

13. Nachrichtenverarbeitungsrechner nach Anspruch 12, **dadurch gekennzeichnet,**
**dass** dieser derart eingerichtet ist, dass aus den Antwort-Nachrichten (303) Parameter, die das Teilnehmergerät (119,139) eines Kommunikationsnetzes (110,120,130) betreffen, ermittelt und weiterverarbeitet werden.

14. Nachrichtenverarbeitungsrechner nach Anspruch 13, **dadurch gekennzeichnet,**
**dass** dieser derart ausgestaltet ist, dass die Parameter bewertet werden.

15. Verfahren zum Verarbeiten einer von einem Kommunikationsgerät (202) an einen Nachrichtenverarbeitungsrechner (201) gesendeten und mit einer Kennung eines Teilnehmers versehenen Anforderungs-Nachricht (301),
**dadurch gekennzeichnet,**
**dass** ermittelt wird, in welchen der über jeweils über einen Schnittstellenrechner (111,121,131) mit dem Nachrichtenverarbeitungsrechner (201) gekoppelten Kommunikationsnetze (110,120,130) Teilnehmergeräte (119,139) des durch die Kennung angezeigten Teilnehmers angeordnet sind und Kommunikationsnetz-Anforderungs-Nachrichten (302) für die betroffenen Kommunikationsnetze (110,120,130) gebildet werden, die an die betroffenen Schnittstellenrechner (111,121,131) gesendet werden.

16. Verfahren nach Anspruch 15, **dadurch gekennzeichnet,**
**dass** aus er Anforderungs-Nachricht (301) eine für jedes Kommunikationsnetz (110,120,130) kommunikationsnetzprotokollkonforme Kommunikationsnetz-Anforderungs-Nachricht (302) gebildet wird, wenn eine Zuordnung der Kennung zu einem Teilnehmergerät (119,139) in dem betroffenen Kommunikationsnetz (110,120,130) ermittelt wird.

17. Verfahren nach Anspruch 15 oder 16, **dadurch gekennzeichnet,**
**dass** Antwort-Nachrichten (303) seitens der Schnittstellenrechner (111,121,131) ermittelt werden und daraus eine Kommunikationsgerät-Antwort-Nachricht (304) gebildet und diese an das Kommunikationsgerät (202) gesendet werden.

18. Verfahren nach einem der Ansprüche 15 bis 17, **dadurch gekennzeichnet,**
**dass** aus den Antwort-Nachrichten (303) Parameter, die das Teilnehmergerät (119,139) eines Kommunikationsnetzes (110,120,130) betreffen, ermittelt und weiterverarbeitet werden.

19. Verfahren nach einem der Ansprüche 15 bis 17, **dadurch gekennzeichnet,**
**dass** die Parameter bewertet und das Ergebnis der Bewertung an das Kommunikationsgerät (202) gesendet werden.

## Claims

1. Communication system (100)
- including a message processing computer (201),
**characterised in that**
- a multiplicity of communication networks (110,120,130) each features an interface computer (111,121,131) which is linked to the message processing computer (201) and is configured so as to reproduce a data stream between the respective interface computer (111,121,131) and the message processing computer (201), and that
- a facility (203) of the message processing computer (201) is configured such that, in the case of a request message (301) which is transferred from a communication device (202) and includes an identification code of a subscriber, provision is made for determining those communication networks (110,120,130) in which subscriber devices (119,139) of the subscriber who is indicated by the identification code are located, and communication network request messages (302) for the relevant communication networks (110,120,130) are formed and sent to the relevant interface computers (111,121,131).

2. Communication system according to claim 1,
**characterised in that**
the interface computers (111,121,131) of each communication network (110,120,130), or a computer (204) outside of the communication networks (110,120,130), contain information relating to the participation of a subscriber device (119,139) in the corresponding communication network (110,120,130).

3. Communication system according to claim 1 or 2,
**characterised in that**
the communication network request messages (302) are formed according to a communication-network-specific protocol of the communication network (110,120,130) concerned.

4. Communication system according to one of the claims 1 to 3,
**characterised in that**
the facility (203) is configured such that, on the basis of the request message (301) of the communication device (202), the identification code which is assigned to the currently sought subscriber devices (119,139) is determined and further processed.

5. Communication system according to one of the claims 1 to 4,
**characterised in that**
the facility is configured such that, if it is not possible to determine a communication device (202) which is assigned to a subscriber who is indicated by the identification code, formation of a communication network request message (302) does not occur.

6. Communication system according to one of the claims 1 to 5,
**characterised in that**
the facility (203) is configured such that the response messages (303) from the side of the interface computers (111,121,131) or from the computer (204) outside of the communication networks (110,120,130) are detected and a communication device response message (304) is formed therefrom and this is sent to the communication device (202).

7. Communication system according to claim 6,
**characterised in that**
the facility (203) is configured such that, from the response messages (303), parameters relating to the subscriber device (119,139) of a communication network (110,120,130) are determined and further processed.

8. Communication system according to claim 6 or 7,
**characterised in that**
the facility (203) is configured such that the parameters are evaluated.

9. Communication system according to one of the preceding claims,
**characterised in that**
the facility (203) is arranged in the message processing computer (201).

10. Communication system according to one of the preceding claims,
**characterised in that**
the communication networks (110,120,130) are represented by:
- a Local Area Network and/or
- a Wireless Local Area Network and/or
- a Group Special Mobile and/or
- a Universal Mobile Telecommunications System and/or
- a Future Public Land Mobile Telephone System and/or
- a Digital Enhanced Cordless Telecommunication and/or
- a wire-based telecommunication system.

11. Message processing computer (201),
**characterised in that**
the message processing computer (201) is configured such that, in the case of a request message (301) which is transferred from a communication device (202) and includes an identification code of a subscriber, provision is made for determining those communication networks (110,120,130), these being linked to the message processing computer (201) via an interface computer (111,121,131) in each case, in which subscriber devices (119,139) of the subscriber who is indicated by the identification code are located, and communication network request messages (302) are formed for the relevant communication networks (110,120,130) and sent to the relevant interface computers (111,121,131).

12. Message processing computer according to claim 11,
**characterised in that**
it is configured such that it detects response messages (303) from the side of the interface computers (111,121,131) and forms a communication device response message (304) therefrom, and sends this to the communication device (202).

13. Message processing computer according to claim 12,
**characterised in that**
it is configured such that, from the response messages (303), parameters relating to a subscriber device (119,139) of a communication network (110,120,130) are determined and further processed.

14. Message processing computer according to claim 13,
**characterised in that**
it is configured such that the parameters are evaluated.

15. Method for processing a request message (301) which is sent to a message processing computer (201) from a communication device (202) and includes an identification code of a subscriber,
**characterised in that**
provision is made for determining those communication networks (110,120,130), these being linked to the message processing computer (201) via an interface computer (111,121,131) in each case, in which subscriber devices (119,139) of the subscriber who is indicated by the identification code are located, and communication network request messages (302) are formed for the relevant communication networks (110,120,130) and sent to the relevant interface computers (111,121,131).

16. Method according to claim 15,
**characterised in that**
from the request message (301), a communication network request message (302) which is communication network protocol-compliant for each communication network (110,120,130) is formed if an assignment of the identification code to a subscriber device (119,139) of the relevant communication network (110,120,130) is determined.

17. Method according to one of the claims 15 or 16,
**characterised in that**
response messages (303) from the side of the interface computers (111,121,131) are detected, and a communication device response message (304) is formed therefrom and this is sent to the communication device (202).

18. Method according to one of the claims 15 to 17,
**characterised in that**
from the response messages (303), parameters relating to the subscriber device (119,139) of a communication network (110,120,130) are determined and further processed.

19. Method according to one of the claims 15 to 17,
**characterised in that**
the parameters are evaluated and the result of the evaluation is sent to the communication device (202).

## Revendications

1. Système de communication (100)
- avec un ordinateur de traitement de messages (201),
**caractérisé en ce que**
- une pluralité de réseaux de communication (110, 120, 130) présentent chacun un ordinateur d'interface (111, 121, 131), lequel est couplé à l'ordinateur de traitement de messages (201) et est configuré pour la représentation d'un flux de données entre l'ordinateur d'interface (111, 121, 131) respectif et l'ordinateur de traitement de messages (201),
- un dispositif (203) de l'ordinateur de traitement de messages (201) est conçu de telle sorte que, dans le cas d'un message de demande (301) transmis par un appareil de communication (202) et pourvu d'un code d'un abonné, on détermine dans lesquels des réseaux de communication (110, 120, 130) des appareils d'abonné (119, 139) de l'abonné indiqué par le code sont disposés et des messages de demande de réseau de communication (302) sont formés pour les réseaux de communication (110, 120, 130) concernés et sont envoyés aux ordinateurs d'interface (111, 121, 131) concernés.

2. Système de communication selon la revendication 1,
**caractérisé en ce que**
les ordinateurs d'interface (111, 121, 131) de chaque réseau de communication (110, 120, 130) ou un ordinateur (204) en dehors des réseaux de communication (110, 120, 130)
contiennent des informations sur la participation d'un appareil d'abonné (119, 139) au réseau de communication (110, 120, 130) correspondant.

3. Système de communication selon la revendication 1 ou 2,
**caractérisé en ce que**
les messages de demande de réseau de communication (302) sont formés selon un protocole spécifique au réseau de communication du réseau de communication (110, 120, 130) concerné.

4. Système de communication selon l'une quelconque des revendications 1 à 3, **caractérisé en ce que**
le dispositif (203) est conçu de telle sorte que le code, qui est attribué aux appareils d'abonné (119, 139) recherchés, est déterminé et retraité à partir du message de demande (301) de l'appareil de communication (202).

5. Système de communication selon l'une quelconque des revendications 1 à 4, **caractérisé en ce que**
le dispositif est conçu de telle sorte que, dans le cas où aucun appareil de communication (202) attribué à un abonné indiqué par le code ne peut être déterminé, on n'a pas une formation d'un message de demande de réseau de communication (302).

6. Système de communication selon l'une quelconque des revendications 1 à 5, **caractérisé en ce que**
le dispositif (203) est conçu de telle sorte que les messages de réponse (303) de la part des ordinateurs d'interface (111, 121, 131) ou de l'ordinateur (204) en dehors des réseaux de communication (110, 120, 130) sont déterminés et un message de réponse d'appareil de communication (304) est formé à partir de là et celui-ci est envoyé à l'appareil de communication (202).

7. Système de communication selon la revendication 6,
**caractérisé en ce que**
le dispositif (203) est conçu de telle sorte que, à partir des messages de réponse (303), des paramètres concernant l'appareil d'abonné (119, 139) d'un réseau de communication (110, 120, 130) sont déterminés et retraités.

8. Système de communication selon la revendication 6 ou 7,
**caractérisé en ce que**
le dispositif (203) est conçu de telle sorte que les paramètres sont évalués.

9. Système de communication selon l'une quelconque des revendications précédentes, **caractérisé en ce que** le dispositif (203) est disposé dans l'ordinateur de traitement de messages (201).

10. Système de communication selon l'une quelconque des revendications précédentes, **caractérisé en ce que** les réseaux de communication (110, 120, 130) sont représentés par
- un Local Area Network et/ou
- un Wireless Local Area Network et/ou
- un Groupe Special Mobile et/ou
- un Universal Mobile Telecommunications System et/ou
- un Future Public Land Mobile Telephone System et/ou
- un Digital Enhanced Cordless Telecommunication et/ou
- un système de télécommunication filaire.

11. Ordinateur de traitement de messages (201),
**caractérisé en ce que**
l'ordinateur de traitement de messages (201) est configuré de telle sorte que, dans le cas d'un message de demande (301) transmis par un appareil de communication (202) et pourvu d'un code d'un abonné, on détermine dans lesquels des réseaux de communication (110, 120, 130) couplés respectivement à l'ordinateur de traitement de messages (201) au moyen d'un ordinateur d'interface (111, 121, 131) sont disposés des appareils d'abonné (119, 139) de l'abonné indiqué par le code et des messages de demande de réseau de communication (302) sont formés pour les réseaux de communication (110, 120, 130) concernés, qui sont envoyés aux ordinateurs d'interface (111, 121, 131) concernés.

12. Ordinateur de traitement de messages selon la revendication 11, **caractérisé en ce que**
celui-ci est configuré de telle sorte qu'il détermine des messages de réponse (303) de la part des ordinateurs d'interface (111, 121, 131) et forme à partir de là un message de réponse d'appareil de communication (304) et l'envoie à l'appareil de communication (202).

13. Ordinateur de traitement de messages selon la revendication 12, **caractérisé en ce que**
celui-ci est configuré de telle sorte que des paramètres, qui concernent l'appareil d'abonné (119, 139) d'un réseau de communication (110, 120, 130), sont déterminés et retraités à partir des messages de réponse (303).

14. Ordinateur de traitement de messages selon la revendication 13, **caractérisé en ce que**
celui-ci est conçu de telle sorte que les paramètres sont évalués.

15. Procédé pour le traitement d'un message de demande (301) envoyé d'un appareil de communication (202) à un ordinateur de traitement de messages (201) et pourvu d'un code d'un abonné,
**caractérisé en ce que**
on détermine dans lesquels des réseaux de communication (110, 120, 130) couplés respectivement par un ordinateur d'interface (111, 121, 131) à l'ordinateur de traitement de messages (201) sont disposés des appareils d'abonné (119, 139) de l'abonné indiqué par le code et des messages de demande de réseau de communication (302) sont formés pour les réseaux de communication (110, 120, 130) concernés, qui sont envoyés aux ordinateurs d'interface (111, 121, 131) concernés.

16. Procédé selon la revendication 15, **caractérisé en ce que** un message de demande de réseau de communication (302) conforme au protocole du réseau de communication pour chaque réseau de communication (110, 120, 130) est formé à partir du message de demande (301) lorsqu'une attribution du code à un appareil d'abonné (119, 139) est déterminée dans le réseau de communication (110, 120, 130) concerné.

17. Procédé selon la revendication 15 ou 16, **caractérisé en ce que**
des messages de réponse (303) de la part des ordinateurs d'interface (111, 121, 131) sont déterminés et un message de réponse de l'appareil de communication (304) est formé à partir de là et est envoyé à l'appareil de communication (202).

18. Procédé selon l'une quelconque des revendications 15 à 17,
**caractérisé en ce que**
des paramètres, qui concernent l'appareil d'abonné (119, 139) d'un réseau de communication (110, 120, 130), sont déterminés et retraités à partir des messages de réponse (303).

19. Procédé selon l'une quelconque des revendications 15 à 17,
**caractérisé en ce que**
les paramètres sont évalués et le résultat de l'évaluation est envoyé à l'appareil de communication (202).
